# EUROPEAN PATENT SPECIFICATION

(11) **EP 1 339 797 B1**
(45) Date of publication and mention of the grant of the patent: **10.04.2013**
(21) Application number: 01991504.0
(22) Date of filing: 01.11.2001
(51) Int. Cl.: C08L 69/00, C08L 67/02

(54) **TRANSPARENT POLYCARBONATE POLYESTER COMPOSITION AND PROCESS**
TRANSPARENTE POLYCARBONAT-POLYESTER-ZUSAMMENSETZUNG UND VERFAHREN
COMPOSITION TRANSPARENT A BASE DE POLYESTER ET POLYCARBONATE ET LE PROCEDE ASSOCIE

(30) Priority: 07.11.2000 US 246395 P; 14.12.2000 US 736879
(43) Date of publication of application: 03.09.2003
(73) Proprietor: SABIC Innovative Plastics IP B.V., 4612 PX Bergen op Zoom (NL)
(72) Inventor: GAGGAR, Satish, Kumar, Parkersburg, WV 26101 (US); HONIGFORT, Paul, Evansville, IN 47712 (US); HOOGLAND, Gabrie, 4823 HP Breda (NL); DE MOOR, Johannes Jacobus, 4623 BA Bergen op Zoom (NL); VAN HEERINGEN, Mark, M., 4617 MI Bergen op Zoom (NL)
(74) Representative: Müller Schupfner & Partner
(86) International application number: PCT/US2001/049880
(87) International publication number: WO 2002/038675

(56) References cited:
- EP-A- 0 916 705
- WO-A-00/52096
- US-A- 3 880 783
- US-A- 5 336 718

## Description

### FIELD OF THE INVENTION

This invention relates to transparent or translucent thermoplastic molding compositions, optionally containing special-effect colorants and processes for producing such compositions.

### BACKGROUND OF THE INVENTION

Polycarbonate (PC) is a high-performance plastic with good impact strength. In addition to ductility (impact strength), general-purpose PC has high transparency, good dimensional stability, low water absorption, good stain resistance and a wide range of colorability. A weak area for PC is its relatively limited range of chemical resistance, which necessitates careful appraisal of applications involving contact with certain organic solvents, some detergents, strong alkali, certain fats, oils and greases. Also, another weak area of PC is that it has a high melt viscosity which makes it difficult to mold. Medium to high flow PC grades suffer from the fact that the low temperature ductility is sacrificed for a better flow. Finally, PC formulations with special-effect colorants like metallic type pigments or mineral flakes are in general very brittle at room temperature. This invention deals with these shortcomings and as such proposes a material that has an unique property profile in terms of transparency, improved chemical resistance, higher flow and low temperature ductility at -20 to -40 °C, even with special-effect colorants.

A widely used method to increase low temperature impact resistance, is the addition of impact modifiers to the PC compositions. Adding minor amounts of methylacrylate-butadiene-styrene (MBS) rubbers or Acrylonitrile-butadiene-styrene (ABS) rubbers results in lower D/B transition temperatures. The major drawback of these modifications is that, even with only 1% addition levels, the transparency decreases, taking away one of the key properties of PC.

This opaqueness is caused by the relatively high refractive index (RI) of the aromatic PC (1.58) compared to the more aliphatic rubbery and/or siloxane components, which do have RI values in the range 1.48-1.56.

It is highly desired to obtain low temperature impact and high transparency at the same time. In some cases some translucency could already be very beneficial, since it is not needed or even desired to have complete transparency such as in lighting housings.

US patent 6,040,382 describes how optical clarity of a blend of 2 transparent, immiscible polymers can be improved by addition of a third polymer which is selectively miscible with one of the two original immiscible polymers. The concept is based on matching refractive indexes. This patent is directed to compositions of monovinyl aromatic-conjugated diene copolymers (like styrene-butadiene block co-polymers), styrene-maleic anhydride copolymers (SMA) and poly (alpha-methylstyrene).

US 5,891,962; US 5,494,969; and US 5,614,589; respectively, describe specific formulations of rubber modified styrene; cycloolefin polymer composites; and methacrylate-acrylonitrile-butadiene-styrene copolymers with urethane copolymer. In these compositions, polymers are being replaced by co-polymers (f.i. polystyrene by a co-polymer of styrene and alkyl(meth)acrylate) to match the RI of a rubbery component. It's also possible to modify the rubbery component to match the RI of the polymer matrix, like in US 5,321,056 and US 5,409,967 assigned to Rohm and Haas. The focus of all these patents is to chemically modify the ingredients to match RI to achieve transparency. Matching RI to achieve transparency is as such not a novelty.

US 5,859,119 to Hoefflin relates to reinforced, molding compositions with desirable ductility and melt flow properties. The composition contains a cyclo aliphatic polyester resin, an impact modifying amorphous resin which increases the ductility of the polyester resin but reduces the melt flow properties thereof, and a high molecular weight polyetherester polymer which increase the melt flow properties of the polyester polymer without reducing the ductility thereof, and a glass filler to reinforce and stiffen the composition and form a reinforced molding composition. This invention is focussed on opaque PC blends.

There is a need to prepare polycarbonate resin compositions and articles made from them that are transparent, have low temperature impact resistance, improved chemical resistance compared to polycarbonate, and good melt processability. It is also desirable to achieve transparencies in situations where only one of the three polymers in the terblend is transparent.

WO00/52096 discloses an article for the optical storage of data having low birefringence prepared from a mixture of a polycarbonate and a cycloaliphatic polyester. The article may optionally have stabilization and mold release additives that retain transparency, colour and processability.

US 3,880,783 discloses a transparent molding composition comprising a bisphenol polycarbonate having a low refractive index due to the content of alkyl substitution and a rubber and/or a resin.

WO 99/63002 discloses a thermoplastic resin comprising a miscible blend of a ductile resin containing greater than 60 percent by weight repeating units of an aryl polycarbonate, and a polyester resin wherein the ratio of polyester resin to ductile resin is from 60 to 40 to 85 to 15, wherein the polyester consists essentially of cycloalkyl containing radicals.

US 5,512,631 discloses compositions comprising (a) a thermoplastic resin having a refractive index greater than 1.55 and (b) a graft copolymer having a substrate with a refractive index of greater than 1.55 and the graft portion has a refractive index of greater than 1.5 wherein the difference in refractive index between components (a) and (b) is not greater than 0.005.

US 5,409,967 discloses impact modifiers which produce transparent, high notched Izod impact strength blends with amorphous aromatic polyesters.

There are references to transparent blends of aromatic polycarbonates with specific cycloaliphatic polyesters.

US 4,188,314 describes shaped articles (such as sheet and helmets) of blends or 25-98 parts by weight (pbw) of an aromatic polycarbonate and 2-75 pbw of a poly cyclohexane dimethanol phthalate where the phthalate is from 5-95% isophthalate and 95-10% terephthalate. Articles with enhanced solvent resistance and comparable optical properties and impact to the base polycarbonate resin and superior optical properties to an article shaped from a polycarbonate and an aromatic polyester, such as polyalkylene terephthalate, are disclosed.

There are other patents that deal with polycarbonate polycyclohexane dimethanol phthalate blends for example; US 4,125,572; US 4,391,954; 4,786,692; 4,897,453 and 5,478,896. US 5,478,896 relates to transparent polycarbonate blends with 10-99% polyester of CHDM with some minor amount of aliphatic diol and iso and terephthalic acid. US 4,786,692 relates to a 2-98% aromatic polycarbonate blend with a polyester made of cyclohexane dimethanol (CHDM) and ethylene glycol (EG) in a 1:1 to 4:1 ratio with iso and terephthalic acid. US 4,391,954 describes compatible compositions ofnon halogen polycarbonate (PC) and amorphous polyesters of CHDM and a specific iso/tere phthalate mixture. US 4,125,572 relates to a blend of 40-95% PC, 5-60% polybutylene terephthalate (PBT) 1-60% and 1-60% an aliphatic/cycloaliphatic iso/terephthalate resin. US 4,897,453 describes blends of 10-90 % PC, 10-90% of a polyester of 0.8-1.5 IV, comprised of 1,4-cyclohexane dicarboxylic acid, 70% trans isomer, CHDM and 15-50 wt. % poly oxytetramethylene glycol with 0-1.5 mole % branching agent. Also claimed are molded or extruded articles of the composition.

### SUMMARY OF THE INVENTION

The prior art is deficient in the use of a blending step as a way to control the chemical composition of the resulting resin mixture to adjust the RI to achieve desired properties of transparency coupled with a lower D/B temperature and at the same time improvement of the flow properties and chemical resistance compared to PC.

There is provided, a transparent molding composition having improved ductility and melt flow properties comprising a uniform resin blend consisting of:
(a) a blend of a polycarbonate resin and poly(cyclohexane dimethanol cyclohexane dicarboxylate), wherein the ratio of poly(cyclohexane dimethanol cyclohexane dicarboxylate) to polycarbonate is from 70:30 to 40:60 and
(b) from 5 to 20% by weight of an impact modifying amorphous resin having a refractive index from 1.51 to 1.58 for increasing the low temperature ductility of the resin molding composition;
(c) said blend of polycarbonate and poly(cyclohexane dimethanol cyclohexane dicarboxylate) having an index of refraction which substantially matches, for obtaining transparency or translucency, the index of refraction of said impact modifier.

Transparent and low temperature ductile Polycarbonate (PC) blends can be obtained via the addition of poly(cyclohexane dimethanol cyclohexane dicarboxylate) (PCCD) and an impact modifier. The complete miscibility of PC and PCCD permits the matching of refractive index (RI) of the impact modifier with the RI of the PC/PCCD blend, by adjusting the PC/PCCD ratio. Examples of such impact modifiers are MBS/ABS type of rubbers with a particle size range from 50-1000 nm, the rubber being butadiene or styrenebutadiene with styrene content of up to 40 %. Styrene to acrylonitrile ratio in ABS rubbers can be between 100/0 and 50/50 with a preferred ratio of 80/20 to 70/30. Typical examples are ABS 415 (RI=1.542) and ABS 336 (RI=1.546), both produced by GE Plastics and BTA702, BTA736, being MBS materials and produced by Rohm & Haas. All these rubbers are used in the PVC market as impact modifiers to improve the toughness of PVC without loosing the transparency.

Surprisingly, with opaque impact modifiers like MBS EXL2600 produced by Rohm & Haas, the effect of adding PCCD to these PC/impact modifier compositions had very similar results; high transmissions and low haze values were obtained with modifiers, each modifier having an unique PC/PCCD ratio to match the RI.

Two types of cycloaliphatic polyesters are used with BPA-based polycarbonate to give the compositions and articles of this invention. The polyester molecules are derived from cycloaliphatic diol and cycloaliphatic diacid compounds, specifically polycyclohexane dimethanol cyclohexyl dicarboxylate (PCCD).

An extra advantage of adding these aliphatic polyesters to PC is that their low glass transition temperature (Tg) improves the flow of PC (or impact modified PC) significantly, resulting in an overall very favorable flow/impact balance. Another advantage is that the polyester improves the overall chemical resistance towards various chemicals that are very aggressive towards straight PC. Examples of these chemicals are acetone, coppertone, gasoline, toluene etc.

The final polycarbonate grade has a unique property profile in terms of transparency combined with low temperature ductility, flow and chemical resistance. The exact ductility can be adjusted by the amount of impact modifier. All impact modifiers outlined above do have an unique PC/PCCD ratio to be used successfully, which means one has the choice to pick a PC/PCCD ratio that fits in the application requirements (heat, flow, chemical resistance are directly determined by the PC/PCCD ratio).

### DETAILED DESCRIPTION OF THE INVENTION

The materials will be blends where the polyester has polycyclohexane dimethanol cyclohexyl dicarboxylate (PCCD).

The preferred polycarbonate will be composed of units of BPA, SBI bis phenol, aryl substituted bisphenols, cycloaliphatic bisphenols and mixtures thereof.

The ratio of PCCD to polycarbonate in the range of weight of the entire mixture is preferred by 70:30 to 40:60.

PCCD has both cycloaliphatic diacid and cycloaliphatic diol components.

The cycloaliphatic polyester resin comprises a polyester having repeating units of the formula I: 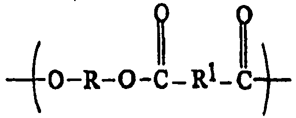 where at least one R or R1 is a cycloalkyl containing radical.

The polyester is a condensation product where R is the residue of an aryl, alkane or cycloalkane containing diol having 6 to 20 carbon atoms or chemical equivalent thereof, and R1 is the decarboxylated residue derived from an aryl, aliphatic or cycloalkane containing diacid of 6 to 20 carbon atoms or chemical equivalent thereof with the proviso that at least one R or R1 is cycloaliphatic. Polyesters of the invention will have both R and R1 cycloaliphatic.

The present cycloaliphatic polyesters are condensation products of aliphatic diacids, or chemical equivalents and aliphatic diols, or chemical equivalents. The present cycloaliphatic polyesters may be formed from mixtures of aliphatic diacids and aliphatic diols but must contain at least 50 mole % of cyclic diacid and/or cyclic diol components, the remainder, if any, being linear aliphatic diacids and/or diols. The cyclic components are necessary to impart good rigidity to the polyester and to allow the formation of transparent blends due to favorable interaction with the polycarbonate resin.

The polyester resins are typically obtained through the condensation or ester interchange polymerization of the diol or diol equivalent component with the diacid or diacid chemical equivalent component.

R and R1 are cycloalkyl radicals independently selected from the following formula:

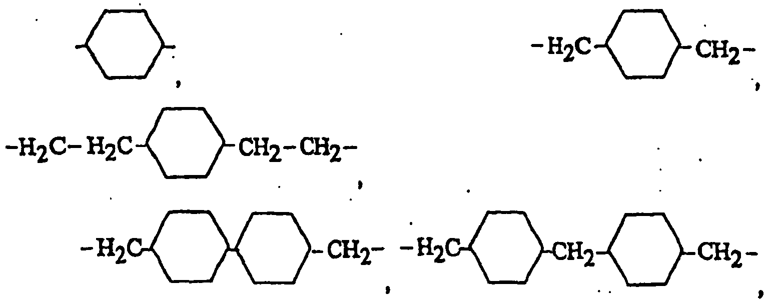

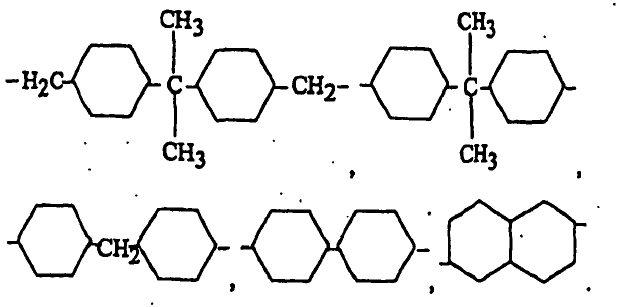

The preferred cycloaliphatic radical R1 is derived from the 1,4-cyclohexyl diacids and most preferably greater than 70 mole % thereof in the form of the trans isomer. The preferred cycloaliphatic radical R is derived from the 1,4-cyclohexyl primary diols such as 1,4-cyclohexyl dimethanol, most preferably more than 70 mole % thereof in the form of the trans isomer.

Other diols useful in the preparation of the polyester resigns of the present invention are straight chain, branched, or cycloaliphatic alkane diols and may contain from 2 to 12 carbon atoms. Examples of such diols include but are not limited to ethylene glycol; propylene glycol, i.e., 1,2- and 1,3-propylene glycol; 2,2-dimethyl-1,3-propane diol; 2-ethyl, 2-methyl, 1,3-propane diol; 1,3- and 1,5- pentane diol; dipropylene glycol; 2-methyl-1,5-pentane diol; 1,6-hexane diol; dimethanol decalin, dimethanol bicyclo octane; 1,4-cyclohexane dimethanol and particularly its cis- and trans-isomers; 2,2,4,4-tetramethyl-1,3-cyclobutanediol (TMCBD), triethylene glycol; 1,10-decane diol; and mixtures of any of the foregoing. Preferably a cycloaliphatic diol or chemical equivalent thereof and particularly 1,4-cyclohexane dimethanol or its chemical equivalents are used as the diol component.

Chemical equivalents to the diols include esters, such as dialkylesters, diaryl esters and the like.

The diacids useful in the preparation of the aliphatic polyester resins of the present invention are cycloaliphatic diacids. This is meant to include carboxylic acids having two carboxyl groups each of which is attached to a saturated carbon. Preferred diacids are cyclo or bicyclo aliphatic acids, for example, decahydro naphthalene dicarboxylic acids, norbornene dicarboxylic acids, bicyclo octane dicarboxylic acids, 1,4-cyclohexanedicarboxylic acid or chemical equivalents, and most preferred is trans-1,4-cyclohexanedicarboxylic acid or chemical equivalent. Linear dicarboxylic acids like adipic acid, azelaic acid, dicarboxyl dodecanoic acid and succinic acid may also be useful.

Cyclohexane dicarboxylic acids and their chemical equivalents can be prepared, for example, by the hydrogenation of cycloaromatic diacids and corresponding derivatives such as isophthalic acid, terephthalic acid or naphthalenic acid in a suitable solvent such as water or acetic acid using a suitable catalysts such as rhodium supported on a carrier such as carbon or alumina. See, Friefelder et al., Journal of Organic Chemistry, 31, 3438 (1966); U.S. Pat. Nos. 2,675,390 and 4,754,064. They may also be prepared by the use of an inert liquid medium in which a phthalic acid is at least partially soluble under reaction conditions and with a catalyst of palladium or ruthenium on carbon or silica. See, U.S. Pat. Nos. 2,888,484 and 3,444,237.

Typically, in the hydrogenation, two isomers are obtained in which the carboxylic acid groups are in cis- or trans-positions. The cis- and trans-isomers can be separated by crystallization with or without a solvent, for example, n-heptane, or by distillation. The cis-isomer tends to blend better; however, the trans-isomer has higher melting and crystallization temperatures and may be preferred. Mixtures of the cis- and trans-isomers are useful herein as well.

When the mixture of isomers or more than one diacid or diol is used, a copolyester or a mixture of two polyesters may be used as the present cycloaliphatic polyester resin.

Chemical equivalents of these diacids include esters, alkyl esters, e.g., dialkyl esters, diaryl esters, anhydrides, salts, acid chlorides, acid bromides, and the like. The preferred chemical equivalents comprise the dialkyl esters of the cycloaliphatic diacids, and the most favored chemical equivalent comprises the dimethyl ester of the acid, particularly dimethyl-1,4-cyclohexanedicarboxylate.

The cycloaliphatic polyester used in the present invention is poly(cyclohexane-1,4-dimethylene cyclohexane-1,4-dicarboxylate) also referred to as poly(1,4-cyclohexane-dimethanol-1,4-dicarboxylate) (PCCD) which has recurring units of formula II:

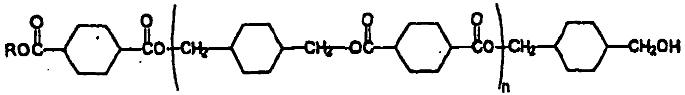

With reference to the previously set forth general formula, for PCCD, R is derived from 1,4 cyclohexane dimethanol; and R1 is a cyclohexane ring derived from cyclohexanedicarboxylate or a chemical equivalent thereof. The favored PCCD has a cis/trans formula.

The polyester polymerization reaction is generally run in the melt in the presence of a suitable catalyst such as a tetrakis (2-ethyl hexyl) titanate, in a suitable amount, typically 50 to 200 ppm of titanium based upon the final product.

The preferred aliphatic polyesters used in the present transparent molding compositions have a glass transition temperature (Tg) which is above 50°C, more preferably above 80°C and most preferably above 100°C.

Also contemplated herein are the above polyesters with from 1 to 50 percent by weight, of units derived from polymeric aliphatic acids and/or polymeric aliphatic polyols to form copolyesters. The aliphatic polyols include glycols, such as poly(ethylene glycol) or poly(butylene glycol). Such polyesters can be made following the teachings of, for example, U.S. Pat. Nos. 2,465,319 and 3,047,539.

Polycarbonates useful in the invention comprise the divalent residue of dihydric phenols, Ar', bonded through a carbonate linkage and are preferably represented by the general formula III: 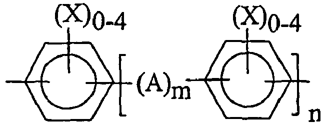 wherein A is a divalent hydrocarbon radical containing from 1 to about 15 carbon atoms or a substituted divalent hydrocarbon radical containing from 1 to about 15 carbon atoms; each X is independently selected from the group consisting of hydrogen, halogen, and a monovalent hydrocarbon radical such as an alkyl group of from 1 to about 8 carbon atoms, an aryl group of from 6 to about 18 carbon atoms, an arylalkyl group of from 7 to about 14 carbon atoms, an alkoxy group of from 1 to about 8 carbon atoms; and m is 0 or 1 and n is an integer of from 0 to about 5. Ar' may be a single aromatic ring like hydroquinone or resorcinol, or a multiple aromatic ring like biphenol or bisphenol A.

The dihydric phenols employed are known, and the reactive groups are thought to be the phenolic hydroxyl groups. Typical of some of the dihydric phenols employed are bis-phenols such as bis(4-hydroxyphenyl)methane, 2,2-bis(4-hydroxyphenyl)propane (also known as bisphenol-A), 2,2-bis(4-hydroxy-3,5-dibromo-phenyl)propane; dihydric phenol ethers such as bis(4-hydroxyphenyl)ether, bis(3,5-dichloro-4-hydroxyphenyl)ether; p,p'-dihydroxydiphenyl and 3,3'-dichloro-4,4'-dihydroxydiphenyl; dihydroxyaryl sulfones such as bis(4-hydroxyphenyl)sulfone, bis(3,5-dimethyl-4-hydroxyphenyl)sulfone, dihydroxy benzenes such as resorcinol, hydroquinone, halo- and alkyl-substituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl)sulfide, bis(4-hydroxyphenyl)sulfoxide and bis(3,5-dibromo-4-hydroxyphenyl)sulfoxide. A variety of additional dihydric phenols are available and are disclosed in U. S. Patent Nos. 2,999,835, 3,028,365 and 3,153,008; all of which are incorporated herein by reference. It is, of course, possible to employ two or more different dihydric phenols or a combination of a dihydric phenol with a glycol.

The carbonate precursors are typically a carbonyl halide, a diarylcarbonate, or a bishaloformate. The carbonyl halides include, for example, carbonyl bromide, carbonyl chloride, and mixtures thereof. The bishaloformates include the bishaloformates of dihydric phenols such as bischloroformates of 2,2-bis(4-hydroxyphenyl)-propane, hydroquinone, and the like, or bishaloformates of glycol, and the like. While all of the above carbonate precursors are useful, carbonyl chloride, also known as phosgene, and diphenyl carbonate are preferred.

The aromatic polycarbonates can be manufactured by any processes such as by reacting a dihydric phenol with a carbonate precursor, such as phosgene, a haloformate or carbonate ester in melt or solution. U.S. Pat. No. 4,123,436 describes reaction with phosgene and U.S. Pat. No. 3,153,008 describes a transesterification process.

Preferred polycarbonate will be made of dihydric phenols that result in resins having low birefringence for example dihydric phenols having pendant aryl or cup shaped aryl groups like:
Phenyl-di(4-hydroxyphenyl) ethane (acetophenone bisphenol):
Diphenyl-di(4-hydroxyphenyl) methane (benzophenone bisphenol):
2,2-bis(3-phenyl-4-hydroxyphenyl) propane
2,2-bis-(3,5-diphenyl-4-hydroxyphenyl) propane;
bis-(2-phenyl-3-methyl-4-hydroxyphenyl) propane;
2,2'-bis(hydroxyphenyl)fluorene;
1,1-bis(5-phenyl-4-hydroxyphenyl)cyclohexane;
3,3'-diphenyl-4,4'-dihydroxy diphenyl ether;
2,2-bis(4-hydroxyphenyl)-4,4-diphenyl butane;
1,1-bis(4-hydroxyphenyl)-2-phenyl ethane;
2,2-bis(3-methyl-4-hydroxyphenyl)-1-phenyl propane ;
6,6'-dihdyroxy-3,3,3',3'-tetramethyl-1,1'-spiro(bis)indane;
(hereinafter "SBI"), or dihydric phenols derived from spiro biindane of formula IV:

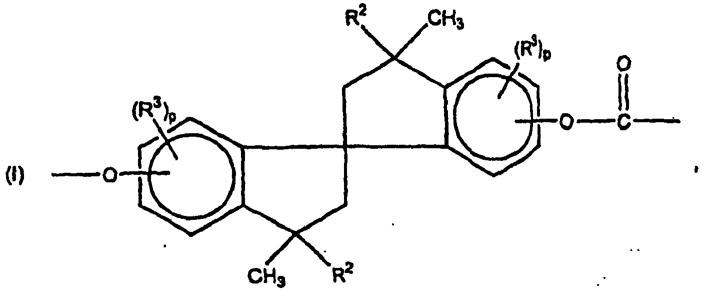

Units derived from SBI and its 5-methyl homologue are preferred, with SBI being most preferred.

Other dihydric phenols which are typically used in the preparation of the polycarbonates are disclosed in U.S. Patents Numbers 2,999,835, 3,038,365, 3,334,154 and 4,131,575. Branched polycarbonates are also useful, such as those described in U.S. Patent Numbers 3,635,895 and 4,001,184. Polycarbonate blends include blends of linear polycarbonate and branched polycarbonate.

It is also possible to employ two or more different dihydric phenols or a copolymer of a dihydric phenol with an aliphatic dicarboxylic acids like; dimer acids, dodecane dicarboxylic acid, adipic acid, azelaic acid in the event a carbonate copolymer or interpolymer rather than a homopolymer is desired for use in the preparation of the polycarbonate mixtures of the invention. Most preferred are aliphatic C5 to C12 diacid copolymers.

The preferred polycarbonates are preferably high molecular weight aromatic carbonate polymers have an intrinsic viscosity (as measured in methylene chloride at 25°C) ranging from 0.30 to 1.00 dl/gm. Polycarbonates may be branched or unbranched and generally will have a weight average molecular weight of from 10,000 to 200,000, preferably from 20,000 to 100,000 as measured by gel permeation chromatography. It is contemplated that the polycarbonate may have various known end groups.

The substantially amorphous impact modifier copolymer resin added to the present composition in an amount between 1 and 30 % by weight may comprise one of several different rubbery modifiers such as graft or core shell rubbers or combinations of two or more of these modifiers. Suitable are the groups of modifiers known as acrylic rubbers, ASA rubbers, diene rubbers, organosiloxane rubbers, EPDM rubbers, SBS or SEBS rubbers, ABS rubbers, MBS rubbers and glycidyl ester impact modifiers.

The term acrylic rubber modifier can refer to multi-stage, core-shell, interpolymer modifiers having a cross-linked or partially crosslinked (meth)acrylate rubbery core phase, preferably butyl acrylate. Associated with this cross-linked acrylic ester core is an outer shell of an acrylic or styrenic resin, preferably methyl methacrylate or styrene, which interpenetrates the rubbery core phase. Incorporation of small amounts of other monomers such as acrylonitrile or (meth)acrylonitrile within the resin shell also provides suitable impact modifiers. The interpenetrating network is provided when the monomers forming the resin phase are polymerized and cross-linked in the presence of the previously polymerized and cross-linked (meth)acrylate rubbery phase.

Preferred rubbers are graft or core shell structures with a rubbery component with a Tg below 0°C, preferably between -40° to -80°C, composed of poly alkylacrylates or polyolefms grafted with PMMA or SAN. Preferably the rubber content is at least 40 wt%, most preferably between 60-90wt%.

Especially suitable rubbers are the butadiene core-shell polymers of the type available from Rohm & Haas, for example Paraloid® EXL2600. Most preferably, the impact modifier will comprise a two stage polymer having an butadiene based rubbery core and a second stage polymerized from methylmethacrylate alone or in combination with styrene. Other suitable rubbers are the ABS types Blendex® 336 and 415, available folm GE Specialty Chemicals. Both rubbers are based on impact modifier resin of SBR rubber. Although the mentioned rubbers appear to be very suitable, there are many more rubbers which can be used. Actually any rubber with a RI between 151 and 1.58 which has a reasonable clarity can be used.

The impact-modified, cycloaliphatic polymer compositions of the present invention comprise:
(A) from 20 to 80% by weight of a blend of polycarbonate and poly(cyclohexane dimethanol cyclohexane dicarboxylate), where the ratio of polycarbonate to PCCD is from 30/70 to 60/40, and
(B) from 5 to 20 % by weight of an impact modifier comprising a substantially amorphous resin comprising one of several different modifiers or combinations of two or more of these modifiers. Suitable are the groups of modifiers known as ABS modifiers ASA modifiers, MBS modifiers, EPDM graft SAN modifiers, acrylic rubber modifiers.

Preferred impact modifiers are of the type disclosed in U.S. Pat. No. 4,292,233. These impact modifiers comprise, generally, a relatively high content of a cross-linked butadiene polymer grafted base having grafted thereon acrylonitrile and styrene.

The method of blending the compositions can be carried out by conventional techniques. Preferable the polyester and polycarbonate are preblended in an amount selected to match the refractive index of the modifier. The ingredients are typically in powder or granular form, extruding the blend and comminuting into pellets or other suitable shapes. The ingredients are combined in any usual manner, e.g., by dry mixing or by mixing in the melted state in an extruder, or in other mixers.

Impact modified polycarbonate resins as outlined above are excellent materials for applications requiring high impact, chemical resistance, and appealing aesthetic. In order to improve the appearance, special effect additives have been utilized as colorants. U.S. patent 5,510,398 to Clark et al relates to a highly filled, extruded polyalkylene terephthalate resin, a polycarbonate resin, a filler, a stabilizer, and a non-dispersing pigment to give the extruded thermoplastic material a speckled surface appearance. Column 5, lines 35 to column 6, line 61, describes impact modifiers. US 5,441,997 to Walsh et al describes the use of impact modifiers in conjunction with polycarbonate/polyester compositions having a barium sulfate, strontium sulfate, zirconium oxide, or zinc sulfate filler. U.S. patent 5,814,712 to Gallucci et al describes a glycidyl ester as an impact modifier, and optionally other impact modifiers, for a polycarbonate/polyester resin. U.S. 4,264,487 to Fromuth et al describes aromatic polycarbonate, acrylate-based core-shell polymer, and aromatic polyester.

The following patents relate to metallic type pigments. WO 99/02594 which describes the use of rectangular aluminum flakes in Nylon compositions. U.S. patent 5,091,010 and EP 0 426 446 relate to the aesthetics of molded articles containing flakes. These references do not address mechanical performance concerns which are addressed by the present invention.

Among the problems to be solved when utilizing polycarbonate resins and particles and pigments to produce special color effects are those related to composition coloring and those related to producing a very bright, metallic reflective sparkle appearance in the molded articles while retaining impact strength and transparency. For most visual effects, it is desirable to have a complete transparent matrix in order to obtain the deepest color effect The use of modifiers in combination various colorant additives may to be detrimental to physical properties such as notched Izod impact. Although various impact modifiers are known in the prior art, the prior art is deficient in addressing the problem of enhancing the impact properties of polycarbonate (alloys) having special effect colorants, while maintaining the transparency. The blend compositions as described in this invention combine appealing aesthetics, chemical resistance, and high impact properties and will be useful in molded article applications where this combination of properties is desirable.

Additionally, additives such as antioxidants, quenchers, minerals such as talc, clay, mica, barite, wollastonite and other stabilizers including but not limited to UV stabilizers, such as benzotriazole, supplemental reinforcing fillers such as flaked or milled glass, and the like, flame retardants, pigments or combinations thereof may be added to the compositions of the present invention.

In the thermoplastic compositions which contain a PCCD resin and a polycarbonate resin it is preferable to use a stabilizer or quencher material. Catalyst quenchers are agents which inhibit activity of any catalysts which may be present in the resins. Catalyst quenchers are described in detail in U.S. Patent 5,441,997. It is desirable to select the correct quencher to avoid color formation and loss of clarity to the polyester polycarbonate blend.

A preferred class of stabilizers including quenchers are those which provide a transparent and colorless product. 'Typically, such stabilizers are used at a level of 0.001-10 weight percent and preferably at a level of from 0.005-2 weight percent. The favored stabilizers include an effective amount of an acidic phosphate salt; an acid, alkyl, aryl or mixed phosphite having at least one acidic hydrogen; a Group IB or Group IIB metal phosphate salt; a phosphorus oxo acid, a metal acid pyrophosphate or a mixture thereof. The suitability of a particular compound for use as a stabilizer and the determination of how much is to be used as a stabilizer may be readily determined by preparing a mixture of the polyester resin component and the polycarbonate and determining the effect on melt viscosity, gas generation or color stability or the formation of interpolymer. The acidic phosphate salts include sodium dihydrogen phosphate, mono zinc phosphate, potassium hydrogen phosphate, calcium dihydrogen phosphate and the like. The phosphites may be of the formula V: 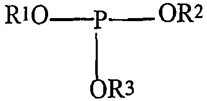 where R1, R2 and R3 are independently selected from the group consisting of hydrogen, alkyl and aryl with the proviso that at least one of R1, R2 and R3 is hydrogen.

The phosphate salts of a Group IB or Group IIB metal include zinc phosphate and the like. The phosphorus oxo acids include phosphorous acid, phosphoric acid, polyphosphoric acid or hypophosphorous acid.

The polyacid pyrophosphates may be of the formula VI:

MzxHyPnO3n+1

wherein M is a metal, x is a number ranging from 1 to 12 and y is a number ranging 1 to 12, n is a number from 2 to 10, z is a number from 1 to 5 and the sum of (xz) + y is equal to n + 2. The preferred M is an alkaline or alkaline earth metal.

The most preferred quenchers are oxo acids of phosphorus or acidic organo phosphorus compounds. Inorganic acidic phosphorus compounds may also be used as quenchers, however they may result in haze or loss of clarity. Most preferred quenchers are phosphoric acid, phosphorous acid or their partial esters.

The glass transition temperature of the preferred blend will be from 60 to 150 °C with the range of 90-150 °C most preferred.

A flexural modulus (as measured by ASTM method D790) at room temperature of greater than or equal to 150,00 psi is preferred, with a flexural modulus of greater than or equal to 250,000 psi being more preferred.

The yellowness index (YI) will be less than 10, preferably less than 5 as measured by ASTM method D1925.

Haze, as measured by ASTM method D1003, will be below 5% in the preferred composition, however in some cases higher haze levels (5-60 %) are preferred in cases where the highest heat resistance is needed.

Above described materials have also been tested in GE Structured Products applications like film and coextruded solid sheet materials. In film advantages like "cold" forming (the low Tg of the material enables the operator to use lower temperatures to thermoform the film), improved tensile impact and chemical resistance were seen. These products will perfectly suit in applications like eg. transparent keypads for mobile phones , where customers require the possibility to form these films at low temperatures (below 100 °C) and further require an improved punch ductility and chemical resistance. Other typical applications of such films are automotive trim, automotive interior parts, portable telecommunications and appliance fronts. Another advantage in film applications is the possibility to add Visual effects pigments (such as coated A1 and glass flakes), which are normally negatively affecting the mechanical properties of Polycarbonate, to this PC/PCCD/ABS blend to enhance required Impact properties. These films can be used in direct film applications but also in processes like IMD (In Mould Decoration).

### EXAMPLES

The following examples serve to illustrate the invention but are not intended to limit the scope of the invention. Blends were prepared by tumbling all ingredients together for 1-5 min at room temperature followed by extrusion at 250-300 °C on a co-rotating 30 mm vacuum vented twin screw extruder. Blends were run at 300 rpm. The output was cooled as a strand in a water bath and pelletized.

The resultant materials were dried at 100-120 °C for 3-6 h and injection molded in discs or sections of discs (fans) for evaluation of optical properties.

Blends of PCCD with BPA-PC and various impact modifiers were prepared and various stabilizers were added to give good color and melt stability. The samples were compounded on a twin screw extruder and injection-molded at standard conditions.

### Example 1

| Batch # | PC 105 grade % | PCCD 4000 poise % | stabili zers % | Impact Modifier % | PC/PCCD ratio | Transmission 2 mm % | MVR (cc/10') (300°C 1.2 kg) | DB °C |
|---|---|---|---|---|---|---|---|---|
| 1 | 99.8 | | 0.2 | | | 91.4 | 5.1 | -10 |
| 2 | 69.6 | 30 | 0.4 | | 70/30 | 90.4 | 16.8 | 0 |
| 3 | 28.4 | 66.2 | 0.4 | 5 % MBS | 30/70 | 89.5 | 31.6 | -20 |
| 4 | 25.4 | 59.2 | 0.4 | 15 % MBS | 30/70 | 88.5 | 14.3 | -32 |
| 5 | 30.6 | 54 | 0.4 | 15 % clear ABS | 36/64 | 89.6 | 22.2 | -6 |
| 6 | 47.3 | 47.3 | 0.4 | 10 % ABS 415 | 50/50 | 89.8 | 7.4 | -22 |
| 7 | 46.6 | 38.1 | 0.4 | 15 % ABS 336 | 45/50 | 88.1 | 6.7 | -33 |
| 8 | 67.2 | 22.4 | 0.4 | 10 % ABS 336 | 25/75 | 77.1 | 4.8 | -32 |

From the data batch 1 -7 it is clear that adding PCCD to PC gives a significant improvement in flow. Adding impact modifiers not only gives an improvement in flow, but also improves low temperature ductility, while obtaining high transparencies in the same range as PC.

In some cases lower amounts of PCCD are desired, than the ones mentioned in batch 2-7. This can be from a cost perspective or that for some applications more heat is required. Although this will result in lower transmission values (the 100 % match of RI is no longer present in the blend), in many cases these values are still high enough to allow for adding special/visual effects like glass or metal flakes and in some cases some translucency is even desired. A typical example is given in the table for batch 8.

### Example 2

These property enhancements are further illustrated in the next table, in which some typical comparisons are made between PC formulated with special effects and blends of PC/PCCD and impact modifier, formulated with the same type of special effects.

| batch # | PC 105 grade | PCCD 2000 poise | stabili zers | Impact Modifier | Special Effect | MVR (cc/10') (265°C 5 kg) | DB |
|---|---|---|---|---|---|---|---|
| | % | % | % | % | | | °C |
| 9 | 98.3 | | 0.5 | | 1.2 % glass/silver flakes | 10.1 | > 25 |
| 10 | 41.7 | 41.7 | 0.4 | 15 % ABS 415 | 1.2 % glass/silver flakes | 12.8 | -22 |
| 11 | 99.3 | | 0.5 | | 0.2 % variochr. red (AngularMetameric) | 10.4 | > 25 |
| 12 | 41.7 | 41.7 | 0.4 | 15 % ABS 415 | 0.2 % variochr. red (AngularMetameric) | 12.8 | -18 |

It is obvious from the data that typical effects like glass and metal flakes turn PC into very brittle blends. However with the correct PCCD and impact modifier loading, the visual effect was very similar to the PC sample, but the blend was still ductile at lower than 0 °C and even had an improved flow. This remarkable achievement of highly ductile, transparent materials with special effects like Angular Metamerism, Diamond, Diffusion and Pearl effects is not restricted to the ones mentioned in the examples.

### Example 3

Film material with a thickness of 220 microns was produced from a 45/45/10 % ratio PC/PCCD/ABS blend and tested with 100% PC film as a reference material. Following results were obtained:

| Test name: | Film sample 1 | Film sample 2 | Film sample 3 |
|---|---|---|---|
| | 100% PC | 45/45/10% PC/PCCD/ABS | 40/60% PC/PCCD |
| Tensile Impact Kj/m2 | 961 | 1129 | 1147 |
| Elongation to br. % | 75.2 | 98.3 | 87.5 |
| After stress cracking | | | |
| "sweat" test : Tensile | | | |
| Strain at max % | 102.8 | 126.4 | 154.6 |
| Taber Abrasion ASTM D1044 25 Rotations Haze% | 27 | 24 | 19 |

From this example it is obvious that impact properties of film material made from PC/PCCD mixtures is improved significantly compared to PC alone, either with or without adding impact modifiers. Also the chemical resistance towards artificial sweat has improved.

## Claims

1. A transparent/translucent molding composition having improved ductility, chemical resistance and melt flow properties comprising a uniform resin blend consisting of a preblend of polycarbonate resin and poly(cyclohexane dimethanol cyclohexane dicarboxylate), wherein the ratio of poly(cyclohexane dimethanol cyclohexane dicarboxylate) to polycarbonate is from 70:30 to 40:60; and from 5 to 20 % by weight of an impact modifying amorphous resin having a refractive index from 1.51 to 1.58 for increasing the low temperature ductility of the resin molding composition; said miscible blend of polycarbonate and poly(cyclohexane dimethanol cyclohexane dicarboxylate) having an index of refraction which substantially matches, for obtaining transparency or translucency, the index of refraction of said impact modifier.

2. A transparent/translucent molding composition according to claim 1 in which the impact modifying amorphous resin is selected from the group consisting of graft or core-shell acrylic rubbers, diene rubber polymers and silicone rubber polymers.

3. A transparent/translucent molding composition according to claim 1 with the addition of 0.0001 to 7 percent by weight of metal or mineral flakes for imparting a desired visual effect, said impact modifier enhancing the impact strength of molded composition as compared to a molding composition absent said impact modifier.

4. A transparent/translucent molding composition of claim 1 where the blend further contains an effective amount of a stabilizer to prevent color formation.

5. A process for molding articles comprising the steps of forming a resin blend consisting of polycarbonate resin and poly(cyclohexane dimethanol cyclohexane dicarboxylate),wherein the ratio of poly(cyclohexane dimethanol cyclohexane dicarboxylate) to polycarbonate is from 70:30 to 40:60, mixing said blend with from 5 to 20 % by weight of an impact modifying amorphous resin having a refractive index from 1.51 to 1.58 for increasing the low temperature ductility of the resin molding composition to form another blend, and molding a transparent article from said other blend wherein said resin blend of said poly(cyclohexane dimethanol cyclohexane dicarboxylate) and said polycarbonate has an index of refraction substantially matching the index of refraction of said impact modifier.

6. A process for molding the transparent articles of claim 5 wherein said molding is carried out above the glass transition temperature of said resin blend, said resin blend having a glass transition temperature of from 60 to 150°C.

7. A process for molding the transparent articles of claim 6 wherein said molding is carried out by injection molding.

## Patentansprüche

1. Transparente/transluzente Formmasse mit verbesserter Duktilität, chemischer Beständigkeit und Schmelzflusseigenschaften, umfassend eine gleichmäßige Harzmischung, bestehend aus einer Vormischung von Polycarbonatharz und Poly(cyclohexandimethanolcyclohexandicarboxylat), wobei das Verhältnis von Poly(cyclohexandimethanolcyclohexandicarboxylat) zu Polycarbonat von 70:30 bis 40:60 beträgt; und von 5 bis 20 Gew.-% von einem amorphen schlagzähigkeitsmodifizierenden Harz mit einem Brechungsindex von 1,51 bis 1,58, um die TieftemperaturZähigkeit der Harzformmasse zu erhöhen; wobei die mischfähige Mischung von Polycarbonat und Poly(cyclohexandimethanolcyclohexandicarboxylat) einen Brechnungsindex aufweist, der, um Transparenz oder Transluzenz zu erreichen, im Wesentlichen mit dem Brechungsindex des Schlagzähigkeitsmodifizierers übereinstimmt.

2. Transparente/transluzente Formmasse nach Anspruch 1, wobei das amorphe schlagzähigkeitsmodifizierende Harz aus der Gruppe ausgewählt ist bestehend aus gepfropften oder Kern-Schale-Acrylkautschuken, Dienkautschuk-Polymeren, und Silikonkautschukpolymeren.

3. Transparente/transluzente Formmasse nach Anspruch 1 mit der Zugabe von 0,0001 bis 7 Gew.-% Metall- oder Mineralflocken, um einen gewünschten visuellen Effekt zu verleihen, wobei der Schlagzähigkeitsmodifizierer die Schlagzähigkeit der Formmasse im Vergleich zu einer Formmasse, der der Schlagzähigkeitsmodifizierer fehlt, verstärkt.

4. Transparente/transluzente Formmasse nach Anspruch 1, wobei die Mischung weiterhin eine wirksame Menge eines Stabilisators enthält, um Farbbildung zu verhindern.

5. Verfahren zum Formen von Gegenständen, umfassend die Schritte des Formens einer Harzmischung bestehend aus Polycarbonatharz und Poly(cyclohexandimethanolcyclohexandicarboxylat), wobei das Verhältnis von Poly(cyclohexandimethanolcyclohexandicarboxylat) zu Polycarbonat von 70:30 bis 40:60 beträgt; Mischen der Mischung mit von 5 bis zu 20 Gew.-% von einem amorphen schlagzähigkeitsmodifizierenden Harz mit einem Brechungsindex von 1,51 bis 1,58, um die TieftemperaturZähigkeit der Harzformmasse zu erhöhen, um eine andere Mischung zu bilden; und Formen eines transparenten Gegenstandes aus der anderen Mischung, wobei die Harzmischung des Poly(cyclohexandimethanolcyclohexandicarboxylats) und des Polycarbonats einen Brechnungsindex aufweist, der im Wesentlichen den Brechungsindex des Schlagzähigkeitsmodifizierers aufweist.

6. Verfahren zum Formen der transparenten Gegenstände nach Anspruch 5, wobei das Formen oberhalb der Glasübergangstemperatur der Harzmischung durchgeführt wird, wobei die Harzmischung eine Glasübergangstemperatur von 60 bis 150 °C aufweist.

7. Verfahren zum Formen der transparenten Gegenstände nach Anspruch 6, wobei das Formen durch Spritzgießen durchgeführt wird.

## Revendications

1. Composition de moulage transparente/translucide à ductilité et résistance chimique améliorée et ayant des propriétés de fluidité à l'état fondu améliorées comprenant un mélange de résine uniforme consistant en un prémélange de résine de polycarbonate et poly(cyclohéxane diméthanol cyclohéxane dicarboxylate), dans laquelle le rapport entre le poly(cyclohéxane diméthanol cyclohéxane dicarboxylate) et le polycarbonate est de 70:30 à 40:60; et de 5 à 20 % en poids d'une résine amorphe modificatrice d'impact ayant un indice de réfraction de 1,51 à 1,58 pour augmenter la ductilité à basse température de la composition de moulage résineuse ; ledit mélange miscible de polycarbonate et de poly(cyclohéxane diméthanol cyclohéxane dicarboxylate) ayant un indice de réfraction qui sensiblement correspond, pour obtenir la transparence ou la translucidité, à l'indice de réfraction dudit modificateur d'impact.

2. Composition de moulage transparente/translucide selon la revendication 1, dans laquelle la résine modificatrice d'impact amorphe est sélectionnée parmi le groupe consistant en les caoutchoucs acryliques greffés ou noyau/coquille, les polymères de caoutchouc diénique et les polymères de caoutchouc siliconique.

3. Composition de moulage transparente/translucide selon la revendication 1 avec l'addition de 0,0001 à 7 % par poids de flocons métalliques ou minéraux pour transmettre un effet visuel souhaité, ledit modificateur d'impact augmentant la force d'impact de la composition de moulage par comparaison avec une composition de moulage dépourvue dudit modificateur d'impact.

4. Composition de moulage transparente/translucide selon la revendication 1 dans laquelle le mélange comprend en outre une quantité effective d'un stabilisateur pour empêcher la formation de couleur.

5. Procédé de moulage d'articles comprenant les étapes consistant à former un mélange de résine consistant en la résine de polycarbonate et le poly(cyclohéxane diméthanol cyclohéxane dicarboxylate), dans lequel le rapport entre le poly(cyclohéxane diméthanol cyclohéxane dicarboxylate) et le polycarbonate est de 70:30 à 40:60, mélanger ledit mélange avec à partir de 5 jusqu'à 20 % en poids d'une résine amorphe modificatrice d'impact ayant un indice de réfraction de 1,51 à 1,58 pour augmenter la ductilité à basse température de la composition de moulage résineuse pour former un autre mélange, et mouler un article transparent à partir dudit autre mélange, dans lequel ledit mélange de résine dudit poly(cyclohéxane diméthanol cyclohéxane dicarboxylate) et dudit polycarbonate a un indice de réfraction qui sensiblement correspond à l'indice de réfraction dudit modificateur d'impact.

6. Procédé de moulage pour les articles transparents selon la revendication 5, dans lequel ledit moulage est mis en oeuvre au-dessus de la température de transition vitreuse dudit mélange de résine, ledit mélange de résine ayant une température de transition vitreuse de 60 à 150°C.

7. Procédé de moulage pour les articles transparents selon la revendication 6, dans lequel ledit moulage est mis en oeuvre par le moulage par injection.
